# EUROPÄISCHE PATENTANMELDUNG

(11) **EP 2 458 573 A1**
(43) Veröffentlichungstag der Anmeldung: **30.05.2012**
(21) Anmeldenummer: 11190568.3
(22) Anmeldetag: 24.11.2011
(51) Int. Cl.: G08G 1/04, G07B 15/02, G08G 1/14

(54) **Informationssystem zum Informieren über ein Fahrzeug**

(30) Priorität: 24.11.2010 DE 102010052437
(71) Anmelder: Köhne, René, 28816 Stuhr (DE)
(72) Erfinder: Köhne, René, 28816 Stuhr (DE)
(74) Vertreter: Eisenführ, Speiser & Partner

(57) **Zusammenfassung**

Die Erfindung bezieht sich auf ein Informationssystem zum Informieren über ein Fahrzeug (4) zwischen dem Beginn eines auf einem Werkstattgelände durchzuführenden Prozesses, das sich auf das Fahrzeug (4) bezieht, und dem Ende des Prozesses. In unterschiedlichen Bereichen (5...10) eines Raums (3), in dem sich das Fahrzeug (4) befindet, sind Ortsbestimmungssensoren (11...16) angeordnet, die angepasst sind, elektrische Signale zu erzeugen, die indikativ sind für das in dem jeweiligen Bereich befindliche Fahrzeug (4). Eine Fahrzeugidentifizierungseinheit (2) identifiziert das Fahrzeug (4) und bestimmt den Bereich (10), in dem sich das Fahrzeug (4) befindet, basierend auf den erzeugten elektrischen Signalen. Eine Darstellungseinheit (17) erzeugt eine Darstellung, die einen Werkstattplan und eine Kennzeichnung des bestimmten Bereichs auf dem Werkstattplan aufweist, und eine Darstellungssendeeinheit (21) sendet die Darstellung an eine Anzeigeeinheit (22).

## Beschreibung

Die Erfindung betrifft ein Informationssystem, ein Informationsverfahren und ein Computerprogramm zum Informieren über ein Fahrzeug zwischen dem Beginn eines auf einem Werkstattgelände durchzuführenden Prozesses, das sich auf das Fahrzeug bezieht, wie der Reparatur oder der Wartung des Fahrzeugs, und dem Ende des Prozesses.

Wenn ein Kunde ein Fahrzeug zu einer Werkstatt bringt, um dieses reparieren zu lassen, wird dem Kunden in der Regel mitgeteilt, dass er benachrichtigt wird, sobald das Fahrzeug repariert worden ist. Der Kunde erhält aber in der Regel in der Zwischenzeit zwischen der Abgabe des Fahrzeugs und des Abholens des Fahrzeugs keine Informationen über das Fahrzeug.

Es ist eine Aufgabe der vorliegenden Erfindung, ein Informationssystem und ein Informationsverfahren zum Informieren über ein Fahrzeug zwischen dem Beginn eines auf einem Werkstattgelände durchzuführenden Prozesses, das sich auf das Fahrzeug bezieht, wie der Reparatur oder Wartung des Fahrzeugs, und dem Ende des Prozesses bereitzustellen. Es ist eine weitere Aufgabe der vorliegenden Erfindung, ein entsprechendes Computerprogramm bereitzustellen.

Die Aufgabe wird durch ein Informationssystem gelöst, das in unterschiedlichen Bereichen des Werkstattgeländes, in dem sich das Fahrzeug befindet, angeordnete Ortsbestimmungssensoren aufweist, die angepasst sind, elektrische Signale zu erzeugen, die indikativ sind für das in dem jeweiligen Bereich befindliche Fahrzeug. Zudem umfasst das Informationssystem eine Fahrzeugidentifizierungseinheit zum Identifizieren des Fahrzeugs und zum Bestimmen des Bereichs, in dem sich das Fahrzeug befindet, basierend auf den erzeugten elektrischen Signalen, eine Darstellungseinheit zum Erzeugen einer Darstellung, die einen Werkstattplan des Werkstattgeländes und eine Kennzeichnung des bestimmten Bereichs auf dem Werkstattplan aufweist, und eine Darstellungssendeeinheit zum Senden der Darstellung an eine Anzeigeeinheit, wobei die Darstellungseinheit als Darstellung eine Internetseite erzeugt, auf der der bestimmte Bereich dargestellt ist, wobei die Darstellungssendeeinheit so angepasst ist, dass die Internetseite auf der Anzeigeeinheit anzeigbar ist.

Es ist bevorzugt, dass das Informationssystem eine Prozessstatuserfassungseinheit zum Erfassen des Prozessstatus des Fahrzeugs aufweist. Insbesondere ist die Prozessstatuserfassungseinheit angepasst, den Prozessstatus des Fahrzeugs in Abhängigkeit von den von den Ortsbestimmungssensoren erzeugten elektrischen Signalen zu erfassen. So kann die Prozessstatuserfassungseinheit angepasst sein, den Prozessstatus in Abhängigkeit von dem Bereich, in dem sich das Fahrzeug befindet, zu erfassen.

Da die Ortsbestimmungssensoren elektrische Signale erzeugen, die indikativ sind für das in dem jeweiligen Bereich des Werkstattgeländes befindliche Fahrzeug, und da die Fahrzeugidentifizierungseinheit das Fahrzeug identifiziert und bestimmt, in welchem Bereich das identifizierte Fahrzeug angeordnet ist, kann ermittelt werden, wo sich das Fahrzeug auf dem Werkstattgelände befindet. Der derart bestimmte Ort des Fahrzeuges wird auf einem Werkstattplan gekennzeichnet, der einem Kunden auf einer Anzeigeeinheit angezeigt werden kann. Wenn also während des Prozesses, der beispielsweise eine Reparatur oder Wartung des Fahrzeugs ist, das Fahrzeug innerhalb des Werkstattgeländes zwischen verschiedenen Bereichen bewegt wird, wird diese Bewegung des Fahrzeugs und ein damit verbundener Prozessfortschritt dem Kunden auf leicht verständliche und schnell erfassbare Art angezeigt. Der Kunde erhält damit Informationen über das Fahrzeug zwischen dem Beginn des Prozesses und dem Ende des Prozesses.

Die Prozessstatuserfassungseinheit kann eine Datenbank aufweisen, die Zuordnungen zwischen dem jeweiligen bestimmten Bereich des Werkstattgeländes, in dem sich das identifizierte Fahrzeug befindet, und einem Prozessstatus aufweist, wobei die Prozessstatuserfassungseinheit angepasst sein kann, den Prozessstatus basierend auf den bestimmten Bereich, in dem sich das identifizierten Fahrzeug befindet, und den Zuordnungen in der Datenbank zu ermitteln. Beispielsweise können bestimmten Bereichen bestimmte Prozentzahlen zugeordnet sein, die angeben, wie viel Prozent des jeweiligen Prozesses abgearbeitet worden ist, um den Prozessstatus zu ermitteln. Auch können in der Datenbank unterschiedliche Zuordnungen für unterschiedliche Prozessklassen abgespeichert sein, wobei nach Eingabe der Prozessklasse, beispielsweise durch Werkstattpersonal, entsprechende Zuordnungen für die Bestimmung des Prozessstatus verwendet werden.

Des Weiteren kann vorgesehen sein, dass die Darstellungseinheit angepasst ist, den erfassten Prozessstatus auf der Darstellung anzuzeigen. Insbesondere kann auf der Darstellung angezeigt werden, wenn der Prozess abgeschlossen ist, so dass der Benutzer automatisch über das Prozessende informiert wird. Es ist des Weiteren bevorzugt, dass die Darstellungseinheit angepasst ist, den erfassten Prozessstatus als Prozent- oder Zeitbalken anzuzeigen, der repräsentativ ist für den bereits durchgeführten Prozess und den noch durchzuführenden Prozess. Der Kunde kann sich daher darüber informieren, wie weit der Prozess, insbesondere der Reparatur- oder Wartungsprozess, bereits fortgeschritten ist und wann mit einer Fertigstellung zu rechnen ist.

Die Bereiche des Werkstattgeländes sind beispielsweise unterschiedliche Plätze, Zimmer, Räume, Hallen, et cetera. Die Ortsbestimmungssensoren sind in den unterschiedlichen Bereichen bevorzugt so angeordnet, dass sie Gebiete des jeweiligen Bereiches abtasten, die von dem Fahrzeug durchquert werden. Wenn beispielsweise die unterschiedlichen Bereiche unterschiedliche Zimmer oder Hallen umfassen, könnten die jeweiligen Ortsbestimmungssensoren so angeordnet sein, dass sie den Eingangsbereich des jeweiligen Zimmers beziehungsweise der jeweiligen Halle abtasten. Die Ortsbestimmungssensoren können Kameras sein, die beispielsweise ein Nummernschild eines Fahrzeugs erfassen, das dann mittels der Fahrzeugidentifizierungseinheit zum Identifizieren des jeweiligen Fahrzeugs verwendet werden kann. Zur Erkennung des jeweiligen Nummernschildes in dem jeweiligen Bild des Fahrzeugs verwendet die Fahrzeugidentifizierungseinheit bevorzugt bekannte Bildverarbeitungsverfahren zur Mustererkennung. Die Ortsbestimmungssensoren können auch andere Elemente des Fahrzeugs erfassen, die dann zur Identifizierung des Fahrzeugs verwendet werden. Beispielsweise kann das Fahrzeug eine RFID-Identifizierung, einen Strichcode, et cetera aufweisen, wobei dann die Ortsbestimmungssensoren die jeweilige Kennung optisch, magnetisch, elektrisch, et cetera abtasten, um ein entsprechendes elektrisches Signal zu erzeugen, das indikativ ist für das in dem jeweiligen Bereich befindliche Fahrzeug und das von der Fahrzeugidentifizierungseinheit zum Identifizieren des jeweiligen Fahrzeugs verwendet werden kann. Die Fahrzeugidentifizierungseinheit weist bevorzugt eine Fahrzeugdatenbank auf, die Fahrzeugdaten und dazugehörige Kennungen wie beispielsweise ein Nummernschild, einen Strichcode, eine RFID-Kodierung, et cetera umfasst. Die Fahrzeugidentifizierungseinheit benutzt bevorzugt diese Datenbank, um das Fahrzeug auf Basis des von den Ortsbestimmungssensoren erzeugten Signals, dass die entsprechende Kennung enthält, zu identifizieren.

Die Darstellungseinheit umfasst bevorzugt einen Webserver, der mit der Anzeigeeinheit, die bevorzugt einen Webbrowser aufweist, kommuniziert, um die Darstellung in dem Webbrowser auf der Anzeigeeinheit darzustellen. Die Anzeigeeinheit ist bevorzugt ein Display eines internetfähigen Geräts beispielsweise eines Computers und/oder eines Mobiltelefons. Das Informationssystem ist daher bevorzugt ein webbasiertes Informationssystem, das den Prozessstatus insbesondere eines Reparaturprozesses in einer Werkstatt auf Basis von elektrischen Signalen von Ortsbestimmungssensoren ermittelt und zusammen mit weiteren Informationen, insbesondere über den aktuellen Aufenthaltsort des Fahrzeugs auf dem Werkstattgelände, anzeigt.

Die Darstellungseinheit erhält von der Fahrzeugidentifizierungseinheit die Information, um welches Fahrzeug es sich handelt und in welchem Bereich sich dieses Fahrzeug befindet. Auf Basis dieser Information ordnet die Darstellungseinheit ein Symbol, das das Fahrzeug repräsentiert, an dem entsprechenden Bereich innerhalb des Werkstattplans an, um die Darstellung zu erzeugen.

Die Fahrzeugdatenbank enthält bevorzugt Informationen über den Kunden, für den das Fahrzeug prozessiert wird, insbesondere für den das Fahrzeug repariert oder gewartet wird. Diese Kundeninformationen enthalten bevorzugt auch Kundenzugangsdaten wie beispielsweise ein Kundenpasswort. Die Darstellungseinheit ist bevorzugt so angepasst, dass sie die erzeugte Darstellung nur an die Anzeigeeinheit eines Kunden sendet, nachdem dieser sich mittels des Kundenpassworts identifiziert hat. Es ist auch möglich, dem Kunden zu erlauben, sich über ein anderes Verfahren als zugangsberechtigter Kunde kenntlich zu machen.

Der Werkstattplan stellt das Werkstattgelände mit den verschiedenen Bereichen dar und könnte auch als Raumplan aufgefasst werden, der einen Plan des durch das Werkstattgelände eingenommenen Raums darstellt.

Es kann vorgesehen sein, dass die Ortsbestimmungssensoren Kameras sind, die ein Bild des Fahrzeugs aufnehmen, wobei die Darstellungseinheit angepasst ist, das aufgenommene Bild des Fahrzeugs anzuzeigen. Die Kameras können auch zur Videoüberwachung verwendet werden.

Es ist des Weiteren bevorzugt, dass die Darstellung ein eine Kamera repräsentierendes Symbol an einer Stelle aufweist, an der eine Kamera ein Bild aufgenommen hat, wobei die Darstellungseinheit angepasst ist, eine Benutzerschnittstelle in der Darstellung bereitzustellen, die es einem Benutzer ermöglicht, das Symbol zu selektieren, und das mit der Kamera aufgenommene Bild darzustellen, wenn das Symbol selektiert worden ist. Es wird damit dem Kunden ermöglicht, sich sein Fahrzeug während des Prozesses, insbesondere während des Reparaturverlaufs oder während des Wartungsprozesses, anzuschauen.

In einer Ausführungsform weist das Informationssystem eine Zeiterfassungseinheit auf, wobei die Zeiterfassungseinheit angepasst ist, die Zeit zu erfassen, während der sich das Fahrzeug in dem bestimmten Bereich befindet. Zudem kann die Darstellungseinheit angepasst sein, die erfasste Zeit in der Darstellung anzuzeigen.

Die Zeiterfassung kann auch angepasst sein, einem Benutzer zu ermöglichen, über eine Benutzerschnittstelle eine Sollzeit einzugeben, die eine geschätzte Gesamtzeit, die zur Abarbeitung beispielsweise eines Auftrags benötigt wird, angibt. Die Sollzeit entspricht dann beispielsweise 100 Prozent und kann in der Darstellung angezeigt werden. Die Zeit, während der sich das Fahrzeug in dem bestimmten Bereich befindet, kann beispielsweise über die Benutzerschnittstelle in die Zeiterfassungseinheit eingegeben werden. Es ist auch möglich, dass mit Hilfe der Ortsbestimmungssensoren und der Fahrzeugidentifizierungseinheit automatisch bestimmt wird, wie lange sich das Fahrzeug in dem bestimmten Bereich befindet, und dass die so bestimmte Zeitdauer mittels der Zeiterfassungseinheit erfasst wird. Die Benutzerschnittstelle kann auch angepasst sein, es beispielsweise Werkstattpersonal zu ermöglichen, eine Auftragsunterbrechung einzugeben, die dann mittels der Darstellungseinheit in der Darstellung angezeigt wird. Wenn beispielsweise ein Ersatzteil erst zu einer bestimmten Zeit zur Verfügung steht, kann dies in der Darstellung angezeigt werden. Beispielsweise kann angezeigt werden, dass das Ersatzteil "Wasserpumpe" erst ab 14 Uhr zur Verfügung steht.

Es kann vorgesehen sein, dass die Darstellungseinheit angepasst ist, Produktinformationen in der Darstellung anzuzeigen. Es ist zudem bevorzugt, dass das Informationssystem eine Produktinformationsdatenbank, in der Produktinformationen abgespeichert sind, die Fahrzeugdaten und/oder Jahreszeitdaten zugeordnet sind, und eine Fahrzeugdatenbank, in der die Fahrzeugdaten abgespeichert sind, aufweist, wobei die Darstellungseinheit angepasst ist, Produktinformation in Abhängigkeit von den Fahrzeugdaten des identifizierten Fahrzeugs und/oder der Jahreszeit der Produktinformationsdatenbank zu entnehmen und in der Darstellung anzuzeigen. Weiter ist es möglich, dass die Darstellungseinheit angepasst ist, in der Darstellung eine Benutzerschnittstelle anzuzeigen, die einem Benutzer ein Auswählen eines der Produktinformation entsprechenden Produkts ermöglicht, und die Auswahl an eine Auftragsbearbeitungseinheit zu senden. Dies ermöglicht es einem Kunden, für ihn sinnvolle und von ihm gewünschte Produkte auf eine einfache Art und Weise auszuwählen, die ohne Zeitverluste in den Prozess eingeführt werden können, während das Fahrzeug noch prozessiert wird. In einer bevorzugten Ausführungsform sind die Produktinformationen, die in der Produktinformationsdatenbank abgelegt sind, nicht nur Fahrzeugdaten und/oder Jahreszeitdaten zugeordnet, sondern auch dem Prozessstatus, so dass Produktinformationen auch in Abhängigkeit von dem Prozessstatus angezeigt werden können. Dies ermöglicht eine weitere Verbesserung des Zusammenspielens zwischen dem Prozess und der Produktauswahl, so dass ein in den Prozess einzuführendes Produkt zu einem Zeitpunkt von dem Kunden bestellt werden kann, zu dem es sich in einem Bereich auf dem Werkstattgelände befindet, in dem dieses Produkt dem Prozess zugeführt wird oder bevor es diesen Bereich erreicht. Dieses Produkt ist bei einem Fahrzeug beispielsweise Motoröl, Sommerreifen, Winterreifen, et cetera, die auf einem Werkstattgelände in bestimmten Bereichen eingefüllt beziehungsweise angebracht werden.

In einer weiteren Ausführungsform weist das Informationssystem eine Anzeigeeinheiterkennungseinheit zum Erkennen des Typs der Anzeigeeinheit, insbesondere einer Displaygröße, auf, wobei die Darstellungseinheit angepasst ist, die Darstellung in Abhängigkeit von dem erkannten Typ zu erzeugen. Dies ermöglicht es, die Darstellung auf der Anzeigeeinheit an beispielsweise die jeweilige Displaygröße anzupassen.

Die oben genannte Aufgabe wird des Weiteren durch ein Informationsverfahren zum Informieren über ein Fahrzeug zwischen dem Beginn eines Prozesses gelöst, das sich auf das Fahrzeug bezieht, und dem Ende des Prozesses, wobei das Informationsverfahren aufweist:
- Erzeugen elektrischer Signale, die indikativ sind für das in einem Bereich des Werkstattgeländes befindliche Fahrzeug, mittels mindestens einen von in unterschiedlichen Bereichen des Raums befindlichen Ortsbestimmungssensoren,
- Identifizieren des Fahrzeugs und Bestimmen des Bereichs, in dem sich das Fahrzeug befindet, basierend auf den erzeugten elektrischen Signalen,
- Erzeugen einer Internetseite, die einen Werkstattplan des Werkstattgeländes und eine Kennzeichnung des bestimmten Bereichs auf dem Werkstattplan aufweist,
- Senden der Internetseite an eine Anzeigeeinheit, so dass die Internetseite auf der Anzeigeeinheit anzeigbar ist.

Die oben genannte Aufgabe wird des Weiteren durch ein Computerprogramm zum Informieren über ein Fahrzeug zwischen dem Beginn eines auf einem Werkstattgelände durchzuführenden Prozesses, das sich auf das Fahrzeug bezieht, und dem Ende des Prozesses gelöst, wobei das Computerprogramm Computerprogrammcodemittel aufweist, die angepasst sind, ein Informationssystem nach Anspruch 1 zu veranlassen, nachfolgende Schritte durchzuführen, wenn das Computerprogramm auf einem Computer ausgeführt wird, der das Informationssystem steuert:
- Erzeugen elektrischer Signale, die indikativ sind für das in einem Bereich des Werkstattgeländes befindliche Fahrzeug, mittels mindestens einen von in unterschiedlichen Bereichen des Werkstattgeländes befindlichen Ortsbestimmungssensoren,
- Identifizieren des Fahrzeugs und Bestimmen des Bereichs, in dem sich das Fahrzeug befindet, basierend auf den erzeugten elektrischen Signalen,
- Erzeugen einer Internetseite, die einen Werkstattplan des Werkstattgeländes und eine Kennzeichnung des bestimmten Bereichs auf dem Werkstattplan aufweist,
- Senden der Internetseite an eine Anzeigeeinheit, so dass die Internetseite auf der Anzeigeeinheit anzeigbar ist.

Das Informationssystem gemäß Anspruch 1, das Informationsverfahren gemäß Anspruch 14 und das Computerprogramm gemäß Anspruch 15 haben ähnliche und/oder identische bevorzugte Ausführungsformen, wie Sie in den abhängigen Ansprüchen definiert sind.

Bevorzugte Ausführungsformen der Erfindung werden im Folgenden unter Bezugnahme auf die Figuren beschrieben.
- Figur 1: zeigt schematisch und beispielhaft eine Ausführungsform eines Informationssystems zum Informieren über ein Fahrzeug zwischen dem Beginn eines auf einem Werkstattgelände durchzuführenden Prozesses, das sich auf das Fahrzeug bezieht, und dem Ende des Prozesses,
- Figuren 2 bis 6: zeigen eine Darstellung eines Werkstattplans, in dem der Bereich, in dem sich ein Fahrzeug befindet, gekennzeichnet ist,
- Figur 7: zeigt beispielhaft einen Balken, der den Status eines Auftrags repräsentiert, und
- Figur 8: zeigt ein Flussdiagramm, das beispielhaft eine Ausführungsform eines Informationsverfahrens zum Informieren über ein Fahrzeug zwischen dem Beginn eines auf einem Werkstattgelände durchzuführenden Prozesses, das sich auf das Fahrzeug bezieht, und dem Ende des Prozesse darstellt.

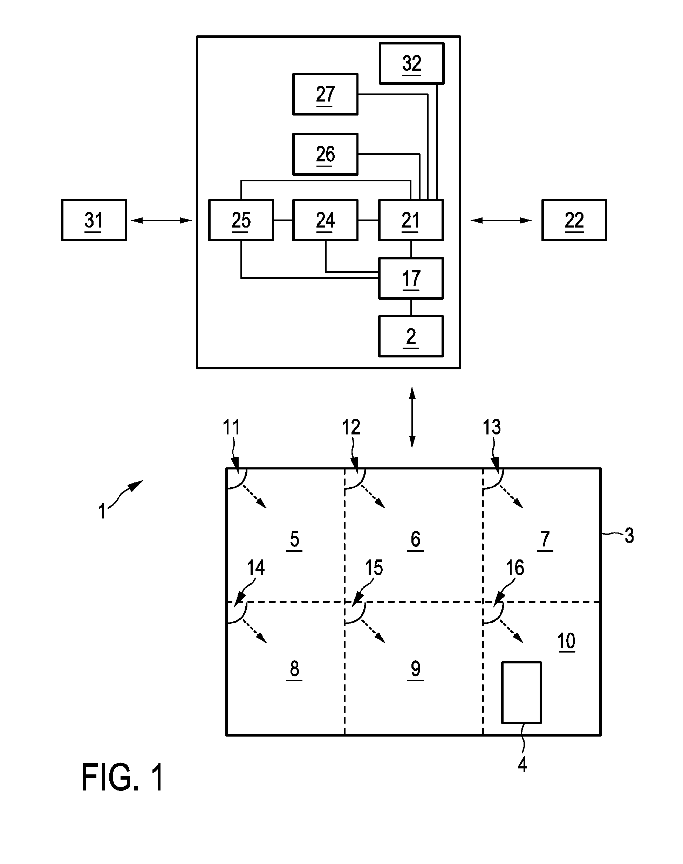

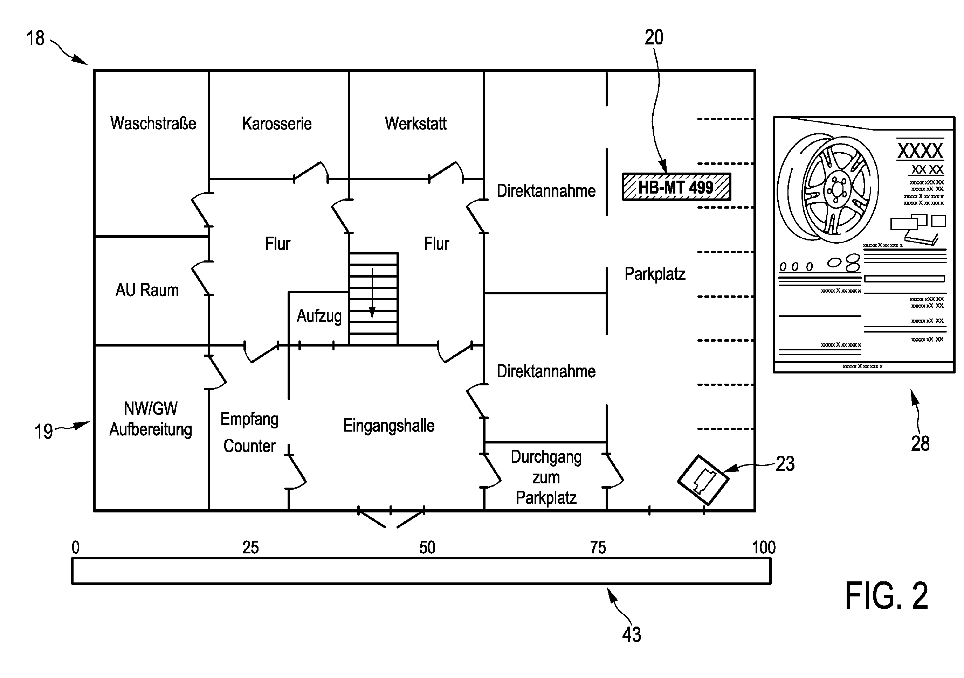

Figur 1 zeigt schematisch und beispielhaft ein Informationssystem zum Informieren über ein Fahrzeug zwischen dem Beginn eines auf einem Werkstattgelände durchzuführenden Prozesses, das sich auf das Fahrzeug bezieht, und dem Ende des Prozesses. Das Informationssystem 1 weist in unterschiedlichen Bereichen 5...10 des Werkstattgeländes 3 angeordnete Ortsbestimmungssensoren 11...16 auf, die angepasst sind, elektrische Signale zu erzeugen, die indikativ sind für das in dem jeweiligen Bereich befindliche Fahrzeug 4. Das Informationssystem 1 weist des Weiteren eine Fahrzeugidentifizierungseinheit 2 zum Identifizieren des Fahrzeugs 4 und zum Bestimmen des Bereichs 10, in dem sich das Fahrzeug 4 befindet, basierend auf den erzeugten elektrischen Signalen auf. Zudem umfasst das Informationssystem 1 eine Darstellungseinheit 17 zum Erzeugen einer Darstellung 18, die beispielhaft in Figur 2 gezeigt ist und einen Werkstattplan 19 und eine Kennzeichnung 20 des bestimmten Bereichs auf dem Werkstattplan 19 aufweist. Das Informationssystem 1 weist des Weiteren eine Darstellungssendeeinheit 21 zum Senden der Darstellung 18 an eine Anzeigeeinheit 22 auf.

Die Bereiche des Werkstattgeländes 3 sind beispielsweise unterschiedliche Plätze, Zimmer, Hallen, Räume et cetera. Das in Figur 1 gezeigte Werkstattgelände 3 ist lediglich schematisch gezeigt, das heißt, in der Realität werden die einzelnen Bereiche in der Regel nicht sechs gleichmäßig angeordnete Bereiche sein. Figur 1 dient lediglich zur Veranschaulichung des grundlegenden Prinzips der Ortsbestimmung des Fahrzeugs 4. Das in Figur 1 gezeigt Werkstattgelände 3 kann ein beliebig aufgeteiltes Werkstattgelände repräsentieren, insbesondere ein Werkstattgelände mit einer Aufteilung in unterschiedliche Bereiche, wie es ebenfalls beispielhaft und schematisch in Figur 2 gezeigt ist.

Die Ortsbestimmungssensoren 11...16 sind in den unterschiedlichen Bereichen 5...10 so angeordnet, dass sie Gebiete des jeweiligen Bereichs abtasten, die von dem Fahrzeug 4 durchquert werden. Wenn beispielsweise die unterschiedlichen Bereiche 5...10 unterschiedliche Zimmer oder Hallen umfassen, könnten die jeweiligen Ortsbestimmungssensoren 11...16 so angeordnet sein, dass sie den Eingangsbereich des jeweiligen Zimmer beziehungsweise der jeweiligen Halle abtasten. In dieser Ausführungsform sind die Ortsbestimmungssensoren 11...16 Kameras, die ein Nummernschild des Fahrzeugs 4 erfassen, wobei das erfasste Nummernschild von der Fahrzeugidentifizierungseinheit 2 verwendet wird, das jeweilige Fahrzeug zu identifizieren. Die Fahrzeugidentifizierungseinheit 2 ist angepasst, bekannte Bildverarbeitungsverfahren zur Mustererkennung zu verwenden, um das jeweilige Nummernschild zu identifizieren. Die Fahrzeugidentifizierungseinheit weist eine Fahrzeugdatenbank auf, in der Fahrzeugdaten und zugehörige Nummernschilder abgespeichert sind. Die Fahrzeugidentifizierungseinheit 2 benutzt bevorzugt diese Fahrzeugdatenbank, um das Fahrzeug auf Basis des mittels des jeweiligen Kamerabildes erkannten Nummernschildes zu identifizieren.

Die Darstellungseinheit 17 erzeugt die Darstellung 18 als eine Internetseite, auf der der bestimmte Bereich dargestellt ist, wobei die Darstellungssendeeinheit 21 so angepasst ist, dass die Internetseite auf der Anzeigeeinheit 22 anzeigbar ist. Die Darstellungseinheit 17 umfasst daher bevorzugt einen Webserver, der mit der Anzeigeeinheit 22, die bevorzugt einen Webbrowser aufweist, kommuniziert, um die Darstellung in dem Webbrowser auf der Anzeigeeinheit 22 darzustellen. Die Anzeigeeinheit 22 ist bevorzugt ein Display eines internetfähigen Geräts eines Kunden wie einem Computer und/oder einem Mobiltelefon.

Die Darstellungseinheit 17 erhält von der Fahrzeugidentifizierungseinheit 2 Information, um welches Fahrzeug, das heißt in dieser Ausführungsform um welches Fahrzeug, es sich handelt und in welchem Bereich sich dieses Fahrzeug befindet. Aus Basis dieser Information ordnet die Darstellungseinheit 17 ein Symbol 20, das das Fahrzeug repräsentiert, an dem entsprechenden Bereich innerhalb des Werkstattplans 19 an, um die Darstellung 18 zu erzeugen.

Die Fahrzeugdatenbank enthält neben den Fahrzeugdaten und den dazugehörigen Kennungen wie das Nummernschild Kundeninformationen, das heißt Informationen über den Kunden, für den das Fahrzeug prozessiert wird. In dieser Ausführungsform sind Kundeninformationen Informationen über den Halter des Fahrzeugs. Diese Kundeninformationen enthalten bevorzugt auch Kundenzugangsdaten wie beispielsweise ein Kundenpasswort. Die Darstellungseinheit 17 ist bevorzugt so angepasst, dass sie die erzeugte Darstellung 18 nur an die Anzeigeeinheit 22 eines Kunden sendet, nachdem dieser sich mittels des Kundenpassworts identifiziert hat. Es ist auch möglich, dem Kunden zu erlauben, sich über ein anderes Verfahren als zugangsberechtigter Kunde kenntlich zu machen.

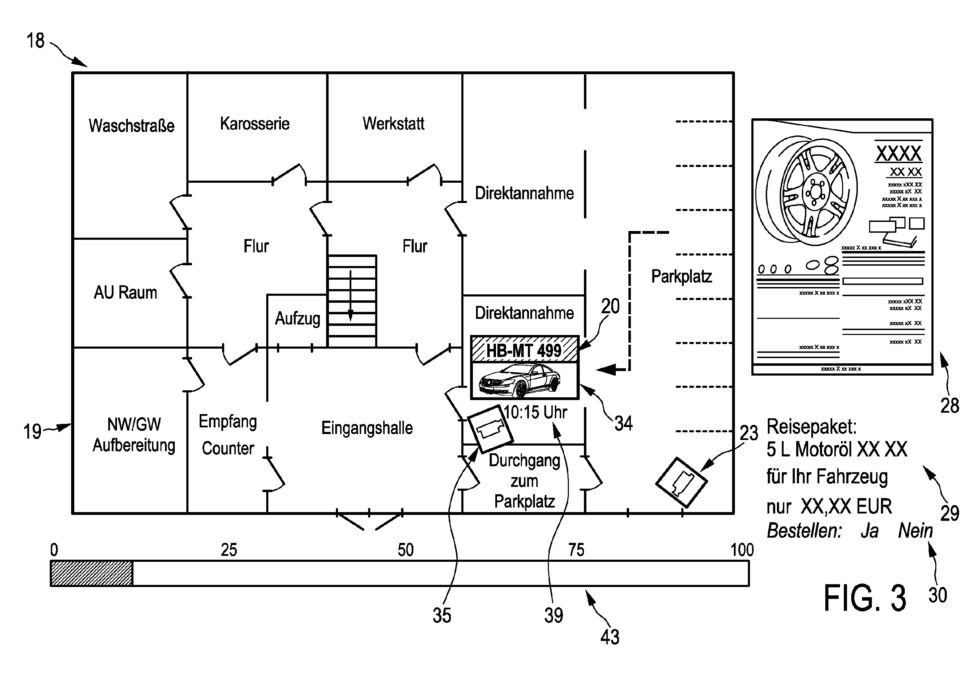

Die Ortsbestimmungssensoren 11...16 sind, wie oben bereits erwähnt, bevorzugt Kameras, die ein Bild des Fahrzeugs 4 aufnehmen. Die Darstellungseinheit 17 kann angepasst sein, das aufgenommene Bild des Fahrzeugs 4 anzuzeigen. Dies ist schematisch und beispielhaft in Figur 3 gezeigt. In Figur 3 ist das von der Fahrzeugidentifizierungseinheit 2 identifizierte Nummernschild 20 zusammen mit dem Bild 34 des Fahrzeugs 4 in dem Bereich "Direktannahme" dargestellt. Die von dem Fahrzeug 4 aufgenommenen Bilder können nicht nur zur Darstellung auf dem Werkstattplan 19 verwendet werden, sondern auch zur Videoüberwachung.

Die Darstellung 19 weist eine Kamera repräsentierende Symbole 23, 35... 38 an Stellen auf, an der eine Kamera ein Bild des Fahrzeugs 4 aufgenommen hat. Diese Symbole 23, 35...38 sind in den Figuren 2 bis 6 beispielhaft gezeigt. Die Darstellungseinheit 17 ist angepasst, eine Benutzerschnittstelle in der Darstellung 18 bereitzustellen, die es einem Benutzer, insbesondere einem Kunden, ermöglicht, das jeweilige Symbol 23, 35...38 zu selektieren, und das mit der jeweiligen Kamera aufgenommene Bild darzustellen, wenn das entsprechende Symbol 23, 35...38 selektiert worden ist. Dieses Bild kann beispielsweise in dem Bereich angezeigt werden, in dem sich das Fahrzeug 4 gerade befindet, wie es in den Figuren 3 bis 6 dargestellt ist, oder das Bild des Fahrzeugs kann in einem anderen Bereich des Displays der Anzeigeeinheit 22, insbesondere in einem anderen Fenster auf dem Display der Anzeigeeinheit 22, angezeigt werden. In einer Ausführungsform wird das jeweils aktuell aufgenommene Bild des Fahrzeugs in dem Bereich gezeigt, in dem sich das Fahrzeug gerade befindet, ohne dass der Kunde zuvor die Kamera, mit dem das aktuelle Bild aufgenommen worden ist, selektieren muss. Durch die Zurverfügungstellung des jeweils aktuellen Bildes wird es dem Kunden ermöglicht, sich das Fahrzeug während des Prozesses, das heißt in dieser Ausführungsform während des Reparaturverlaufs, anzuschauen.

Das Informationssystem weist zudem bevorzugt eine Zeiterfassungseinheit 24, wie beispielsweise eine Uhr, auf, die angepasst ist, die Zeit zu erfassen, während der sich das Fahrzeug 4 in dem bestimmten Bereich befindet. Die Darstellungseinheit 17 kann angepasst sein, die erfasste Zeit in der Darstellung 18 anzuzeigen. Die Zeiterfassungseinheit 24 kann die Zeit erfassen, zu der das Fahrzeug in den jeweiligen Bereich gelangt ist, die Zeit, zu der das Fahrzeug den jeweiligen Bereich verlassen hat, und damit die Zeit, während der sich das Fahrzeug in dem jeweiligen Bereich befindet. Die Zeiterfassungseinheit 24 kann auch angepasst sein, nur die Zeit zu erfassen, zu der das Fahrzeug den jeweiligen Bereich erreicht hat, oder nur die Zeit, zu der das Fahrzeug den jeweiligen Bereich verlassen hat. Die Darstellungseinheit 17 kann demnach angepasst sein, beispielsweise nur die Ankunftszeit in der Darstellung 19 anzuzeigen oder nur die Zeit, zu der das Fahrzeug den jeweiligen Bereich verlässt. In den Figuren 3 bis 6 ist beispielsweise jeweils die Ankunftszeit 39...42 in dem jeweiligen Bereich angezeigt, in dem sich das Fahrzeug 4 aktuell befindet.

Das Informationssystem 1 weist des Weiteren eine Prozessstatuserfassungseinheit 25 zum Erfassen des Prozessstatus des Fahrzeugs 4 auf. In dieser Ausführungsform ist die Prozessstatuserfassungseinheit 25 angepasst, den Reparaturstatus des Fahrzeugs zu erfassen.

Die Prozessstatuserfassungseinheit 25 kann eine Datenbank aufweisen, die Zuordnungen zwischen dem jeweiligen bestimmten Bereich des Werkstattgeländes, in dem sich das identifizierte Fahrzeug befindet, und einem Prozessstatus aufweist, wobei die Prozessstatuserfassungseinheit angepasst sein kann, den Prozessstatus basierend auf den bestimmten Bereich, in dem sich das identifizierten Fahrzeug befindet, und den Zuordnungen in der Datenbank zu ermitteln. Beispielsweise können bestimmten Bereichen bestimmte Prozentzahlen zugeordnet sein, die angeben, wie viel Prozent des jeweiligen Prozesses abgearbeitet worden ist, um den Prozessstatus zu ermitteln. Auch können in der Datenbank unterschiedliche Zuordnungen für unterschiedliche Prozessklassen abgespeichert sein, wobei nach Eingabe der Prozessklasse, beispielsweise durch Werkstattpersonal, entsprechende Zuordnungen für die Bestimmung des Prozessstatus verwendet werden.

Die Darstellungseinheit 17 ist angepasst, den erfassten Prozessstatus auf der Darstellung 18 anzuzeigen. Insbesondere kann auf der Darstellung 18 angezeigt werden, wenn der Prozess abgeschlossen ist, das heißt in dieser Ausführungsform wenn die Reparatur abgeschlossen ist, so dass der Kunde automatisch über das Prozessende informiert wird. Die Darstellungseinheit 17 ist bevorzugt angepasst, den Prozessstatus als Prozentbalken 43 anzuzeigen, der repräsentativ ist für den bereits durchgeführten Prozess und den noch durchzuführenden Prozess. Der Kunde kann sich daher darüber informieren, wie weit der Prozess, insbesondere die Reparatur, bereits fortgeschritten ist und wann mit einer Fertigstellung zu rechnen ist. Anstelle des oder zusätzlich zu dem Prozentbalken 43 kann die Darstellungseinheit 17 auch einen Zeitbalken anzeigen, der ebenfalls repräsentativ ist für den bereits durchgeführten Prozess und den noch durchzuführenden Prozess.

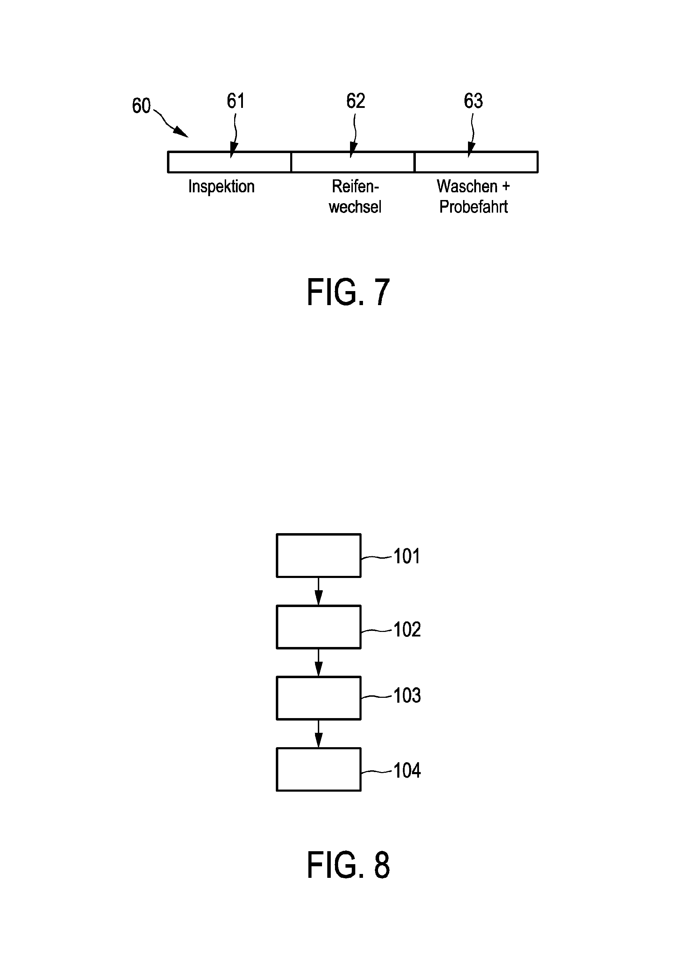

Der Balken kann auch angepasst sein, Auftragsabschnitte, die abgearbeitet worden sind und/oder noch abzuarbeiten sind, darzustellen. Das heißt, der Balken kann nach Tätigkeiten aufgeteilt sein. Ein derartiger Balken 60 ist beispielhaft in Figur 7 gezeigt. Der Balken 60 weist mehrere Abschnitte 61, 62, 63 auf, die in diesem Beispiel den Auftragsabschnitten""Inspektion", "Reifenwechsel" und "Waschen und Probefahrt" entsprechen. Über eine Benutzerstelle kann beispielsweise ein Werkstattmitarbeiter eingeben, dass ein bestimmter Auftragsabschnitt abgearbeitet worden ist, wonach der entsprechende Balkenabschnitt beispielsweise eingefärbt wird, um den Auftragsfortschritt anzuzeigen. Auch in diesem Beispiel kann das Einfärben des Balkens 60 automatisch, das heißt, ohne Eingaben des Werkstattpersonals, erfolgen, indem bestimmt wird, in welchem Bereich sich das Fahrzeug befindet, und jedem Bereich ein Auftragsabschnitt zugeordnet ist. Wenn dann das Fahrzeug einen bestimmten Bereich verlässt, beispielsweise den Bereich des Werkstattgeländes, in dem die Reifen gewechselt werden, so wird der entsprechende Balkenabschnitt entsprechend eingefärbt.

Der Balken kann also beispielsweise die geplante und die schon geleistete Arbeitszeit anzeigen. Alternativ oder zusätzlich kann der Balken zudem detaillierte Informationen anzeigen, wie beispielsweise welche Tätigkeiten und/oder Arbeitsschritte bereits geleistet worden sind bzw. noch geplant sind.

Da die Ortsbestimmungssensoren 11...16 elektrische Signale erzeugen, die indikativ sind für das in dem jeweiligen Bereich des Werkstattgeländes 3 befindlichen Fahrzeugs, insbesondere da die Kameras 11...16 zumindest das Nummernschild des Fahrzeugs erfassen, und da die Fahrzeugidentifizierungseinheit 2 das Fahrzeug identifiziert und bestimmt, in welchem Bereich das identifizierte Fahrzeug angeordnet ist, kann ermittelt werden, wo sich das Fahrzeug auf dem Werkstattgelände befindet. Der derart bestimmte Ort des Fahrzeugs wird auf dem Werkstattplan 19 gekennzeichnet, der dem Kunden auf der Anzeigeeinheit 22 angezeigt werden kann. Wenn also während der Reparatur das Fahrzeug auf dem Werkstattgelände zwischen verschiedenen Bereichen bewegt wird, wird diese Bewegung des Fahrzeugs und ein damit verbundener Prozessfortschritt dem Kunden auf leicht verständliche und schnell erfassbare Art auf seiner Anzeigeeinheit 22 angezeigt. Die Prozessstatuserfassungseinheit 25 kann angepasst sein, den Prozessstatus in Abhängigkeit von dem Bereich zu ermitteln, in dem sich das Fahrzeug gerade befindet, und in Abhängigkeit von Auftragsdaten, die dem Fahrzeug zugeordnet in der Fahrzeugdatenbank gespeichert sein können. Da Teile des Auftrags in bestimmten Bereichen durchgeführt werden und da der Bereich, in dem sich das Fahrzeug befindet, und die Bereiche, die das Fahrzeug bereits durchschritten hat, bekannt sind, kann automatisch bestimmt werden, welche Teile des Auftrags bereits abgearbeitet sind und welche Teile des Auftrags noch abgearbeitet werden müssen. Der sich darauf ergebende Prozessstatus kann mittels des Prozentbalkens 43 angezeigt werden. Es ist auch möglich, dass das Werkstattpersonal in das Informationssystem über eine geeignete Benutzerschnittstelle eingibt, welche Auftragsteile bereits ausgeführt worden sind, wonach die Prozessstatuserfassungseinheit 25 auf Basis dieser eingegebenen Daten und in der Fahrzeugdatenbank abgelegter Auftragsdaten, die den Gesamtprozess beschreiben, den Prozessstatus bestimmt, der in der Darstellung 18 mittels des Prozentbalkens 43 dargestellt wird.

In Figur 2 hat eine erste Kamera ein Bild des auf dem Parkplatz fahrenden Fahrzeugs aufgenommen und die Fahrzeugidentifizierungseinheit 2 hat mittels des Nummernschildes und der Fahrzeugdatenbank das Fahrzeug identifiziert.

Der Parkplatz weist mehrere Parkbuchten auf. Das Informationssystem kann mehrere Kameras umfassen, wobei jede Kamera einem Parkbereich des Parkplatzes zugeordnet ist und dazu verwendet wird, zu ermitteln, ob das Fahrzeug in dem jeweiligen Parkbereich geparkt worden ist. Eine Kamera kann auch ein Bild erzeugen, das mehrere Parkbereiche aufweist, wobei, da das Bild natürlich Ortsinformationen enthält, auf Basis des Bildes ermittelt werden kann, in welchem der Parkbereiche, die auf dem Bild dargestellt sind, das Fahrzeug geparkt worden ist.

Die Darstellungseinheit erzeugt eine Darstellung 18, wie sie schematisch und beispielhaft in Figur 2 gezeigt ist, auf der eine Kennzeichnung 20 den Bereich markiert, in dem das Fahrzeug geparkt worden ist. Da mit der Reparatur noch nicht begonnen worden ist, zeigt der Prozentbalken 43 0 % an.

Dann wird das Fahrzeug von seinem Parkbereich auf dem Parkplatz in den Bereich "Direktannahme" bewegt (siehe Figur 3). Beim Einfahren in den Bereich "Direktannahme" wird ein Bild des Fahrzeugs, das insbesondere das Nummernschild zeigt, aufgenommen, und die Fahrzeugidentifizierungseinheit 2 identifiziert das Fahrzeug auf Basis des aufgenommen Bildes. Damit ist festgestellt worden, dass sich das Fahrzeug jetzt in dem Bereich "Direktannahme" befindet, was auf der Darstellung 18 angezeigt wird (siehe Figur 3). In Figur 3 zeigt der Prozentbalken 43 einen entsprechenden Fortschritt des Prozesses.

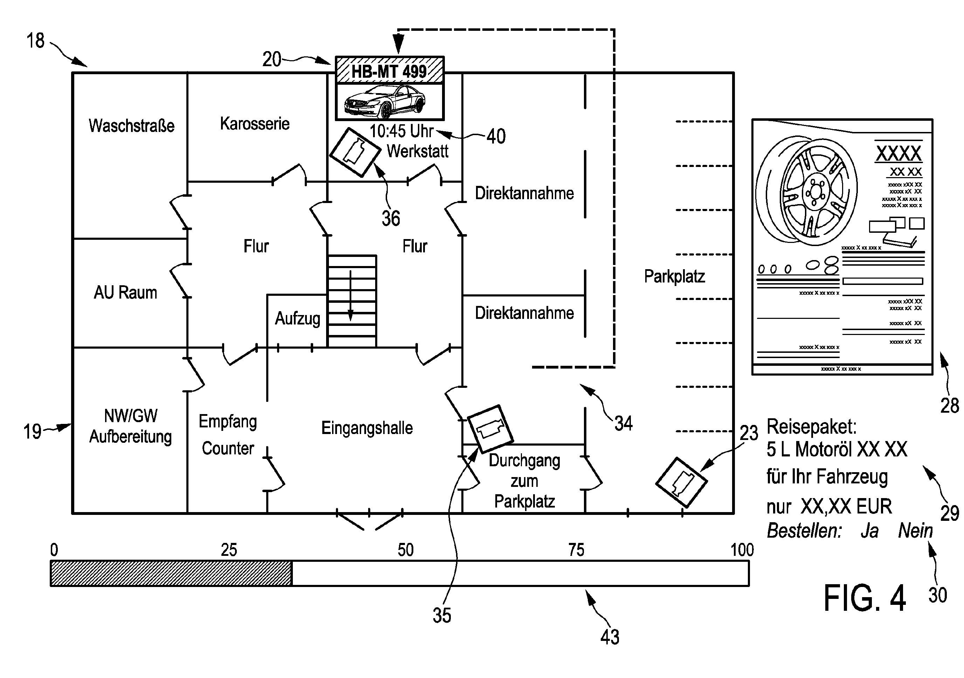

Dann wird das Fahrzeug von der Direktannahme in die Werkstatt bewegt. Auch beim Einfahren in die Werkstatt nimmt eine Kamera ein Bild des Fahrzeugs, auf dem zumindest das Nummernschild zu erkennen ist, auf, wobei die Fahrzeugidentifizierungseinheit das Fahrzeug auf Basis des aufgenommenen Nummernschildes identifiziert. Somit ist bestimmt worden, dass sich das Fahrzeug jetzt in der Werkstatt befindet, wobei die Darstellungseinheit 17 dies auf der Darstellung 18 entsprechend anzeigt (siehe Figur 4). Zudem wird der Fortschritt im Reparaturprozess von der Prozessstatuserfassungseinheit 25 erfasst und die Darstellungseinheit 17 zeigt auf der Darstellung 18 den Fortschritt des Reparaturstatus mittels des Prozentbalkens 43 entsprechend an.

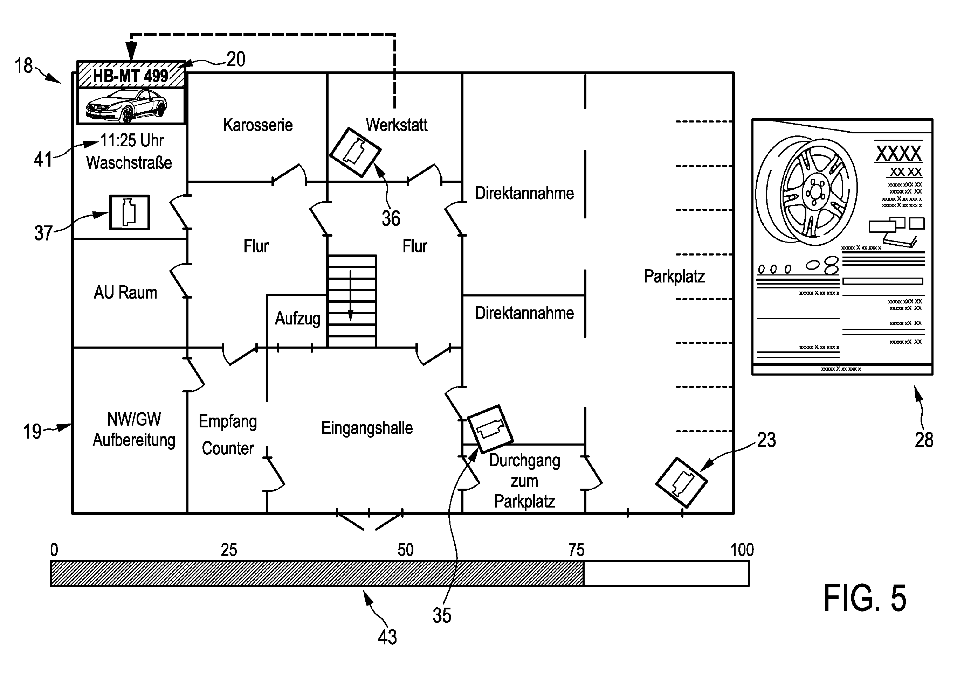

Nachdem die Arbeiten in der Werkstatt abgeschlossen sind, wird das Fahrzeug zur Waschhalle bewegt, wobei auch bei der Einfahrt in die Waschhalle ein Bild des Fahrzeugs aufgenommen wird, das zumindest das Nummernschild zeigt, so dass die Fahrzeugidentifizierungseinheit das Fahrzeug identifizieren kann. Der somit bestimmte aktuelle Ort des Fahrzeugs wird ebenfalls auf der Darstellung 18 angezeigt (siehe Figur 5). Der entsprechende Fortschritt im Prozess wird durch den Prozentbalken 43 dargestellt.

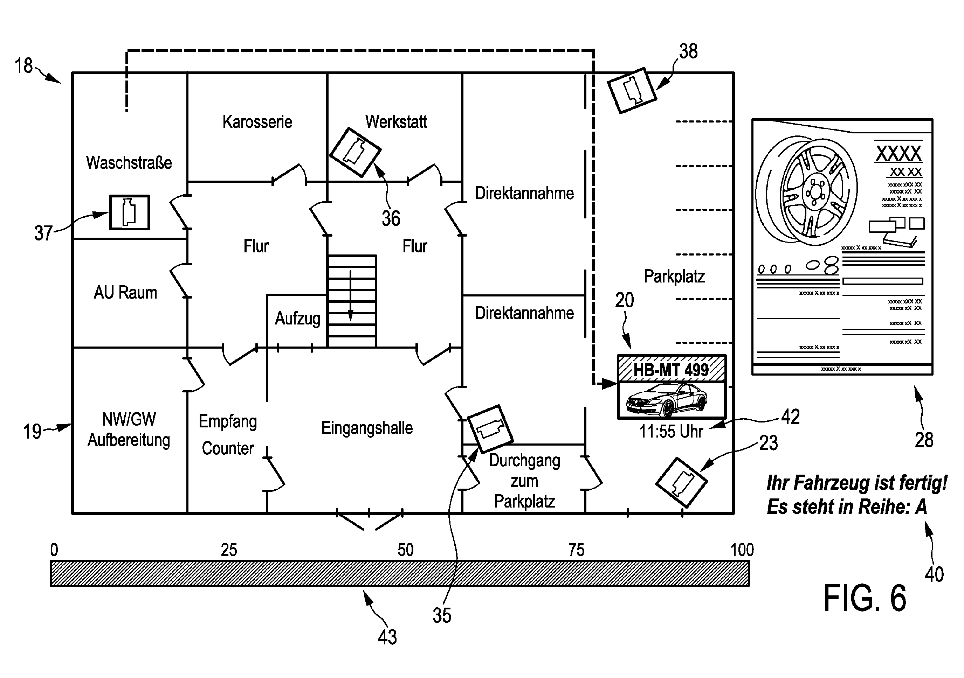

Nachdem das Fahrzeug gewaschen worden ist, wird es wieder zu dem Parkplatz gefahren, und dort in einem Parkbereich geparkt. Dieser Parkbereich wird wiederum von einer Kamera erfasst, so dass ein Bild erzeugt wird, das zumindest das Nummernschild zeigt und es der Fahrzeugidentifizierungseinheit ermöglicht, das Fahrzeug in dem Parkbereich zu identifizieren. Die Darstellungseinheit 17 ändert die Darstellung 18 entsprechend derart, dass die das Fahrzeug repräsentierende Kennzeichnung 20 jetzt in dem bestimmten Parkbereich dargestellt wird (siehe Figur 6). Da das Fahrzeug jetzt nach dem Waschen wieder in einem Parkbereich auf dem Parkplatz angeordnet ist, ermittelt die Prozessstatuserfassungseinheit 25, dass der Prozess, das heißt in dieser Ausführungsform die Reparatur des Fahrzeugs, abgeschlossen ist. Die Darstellungseinheit 17 zeigt daher einen entsprechend gefüllten Prozentbalken 43.

Die Darstellungseinheit 17 kann auch angepasst sein, den jeweiligen Prozessstatus mittels einer Farbe darzustellen. Beispielsweise kann der Prozentbalken 43 und/oder kann die Kennzeichnung 20 in einer Farbe, wie beispielsweise grün, dargestellt werden, wenn der Prozess abgeschlossen ist. Der Prozentbalken 43 und/oder die Kennzeichnung 20 können auch in unterschiedlichen Farben dargestellt werden, je nachdem in welchem Bereich sich das Fahrzeug aktuell befindet.

Die Darstellungseinheit 17 ist bevorzugt weiter angepasst, Produktinformationen 28, 29 in der Darstellung 18 anzuzeigen. Das Informationssystem 1 weist bevorzugt neben der Fahrzeugdatenbank 27 eine Produktinformationsdatenbank 26 auf, in der Produktinformationen abgespeichert sind, die Fahrzeugdaten und/oder Jahreszeitdaten zugeordnet sind, wobei die Darstellungseinheit 17 angepasst ist, Produktinformationen in Abhängigkeit von den Fahrzeugdaten des identifizierten Fahrzeugs und/oder der Jahreszeit der Produktinformationsdatenbank 26 zu entnehmen und in der Darstellung 18 anzuzeigen. Die Darstellungseinheit 17 ist angepasst, in der Darstellung 18 eine Benutzerschnittstelle 30 anzuzeigen, die einem Benutzer ein Auswählen eines der Produktinformationen entsprechenden Produkts ermöglicht, und die Auswahl an eine Auftragsbearbeitungseinheit 31 zu senden. Die Auftragsbearbeitungseinheit 31 leitet den entsprechenden Auftrag an beispielsweise einen entsprechenden Werkstattbereich weiter, in dem das Werkstattpersonal über den Auftrag informiert wird, der dann sofort ausgeführt werden kann. Der Kunde kann demnach für ihn sinnvolle und von ihm gewünschte Produkte auf eine einfache Art und Weise noch während sich das Fahrzeug im Reparaturprozess befindet, auswählen, ohne große Zeitverluste in den Prozess einzuführen. In einer bevorzugten Ausführungsform sind die Produktinformationen, die in der Produktinformationsdatenbank 26 abgelegt sind, nicht nur Fahrzeugdaten und/oder Jahreszeitdaten zugeordnet, sondern auch dem von der Prozessstatuserfassungseinheit 25 erfassten Prozessstatus, so dass Produktinformationen auch in Abhängigkeit von dem Prozessstaus angezeigt werden können. Beispielsweise kann ein in den Prozess einzuführendes Produkt zu einem Zeitpunkt von dem Kunden bestellt werden, zu dem sich das Fahrzeug in dem Werkstattbereich befindet, in dem dieses Produkt dem Prozess zugeführt wird, oder bevor das Fahrzeug in diesen Werkstattbereich bewegt wird. Dieses Produkt ist beispielsweise Motoröl, Sommerreifen, Winterreifen, et cetera, die auf einem Werkstattgelände in bestimmten Bereichen eingefüllt beziehungsweise angebracht werden.

In dem in den Figuren 2 bis 6 gezeigten Beispiel der Darstellung 18 wird dem Kunden zunächst eine allgemeine Produktinformation 29 auf der Darstellung 18 gezeigt (siehe Figur 2). Nachdem das Fahrzeug identifiziert worden ist, kann eine Produktinformation unter anderem auf Basis der Fahrzeugdaten der Produktinformationsdatenbank 26 entnommen werden. In dem hier gezeigten Beispiel können Motoröl und weitere Produkte als Reisepaket angeboten werden. Die Produktinformation 29 enthält nicht nur Informationen über das Produkt, sondern auch Preisangaben. Mittels der Benutzerschnittstelle 30 kann der Kunde dann entscheiden, ob er dieses Reisepaket kaufen möchte. Diese Bestellung würde dann an die Auftragsbearbeitungseinheit 31 gesendet werden, die den entsprechenden Auftrag bezüglich des Reisepakets dem Werkstattpersonal zur Verfügung stellt, so dass dieses den Auftrag entsprechend bearbeiten kann. Die Produktinformation kann in Abhängigkeit von dem Prozessstatus zeitlich begrenzt dargestellt werden, insbesondere kann die Möglichkeit der Auswahl mittels der Benutzerschnittstelle 30 zeitlich begrenzt werden. In dem Zustand, der in den Figuren 3 und 4 gezeigt ist, befindet sich das Fahrzeug in der Direktannahme (Figur 3) beziehungsweise in der Werkstatt (Figur 4). Während sich das Fahrzeug in der Direktannahme beziehungsweise in der Werkstatt befindet, kann das Reisepaket problemlos dem Reparaturprozess zugeführt werden, so dass die Benutzerschnittstelle 30 dem Kunden die Möglichkeit gibt, das Reisepaket zu bestellen. In dem in Figur 5 gezeigten Zustand befindet sich das Fahrzeug bereits in der Waschhalle, so dass Motoröl beispielsweise nicht mehr ohne Weiteres nachgefüllt werden kann. Die Produktinformation 29 und die Benutzerstelle 30 sind daher in Figur 5 nicht mehr gezeigt. Wenn der Prozess abgeschlossen ist, wird in einem Textfeld 40 angezeigt, dass das Fahrzeug fertig ist, wo das Fahrzeug steht und wer der Ansprechpartner ist (siehe Figur 6).

Die Produktinformation, das heißt insbesondere Werbung, kann wie auf einer Homepage flexibel und nach Kundenwunsch eingestellt werden. Die Produktinformation kann zeitlich wechselnd dargestellt werden. Bevorzugt ist parametrierbar, welche Produktinformation welchem Kunden gezeigt wird.

Dass der Prozess abgeschlossen ist, kann von dem Werkstattpersonal mittels einer Benutzerschnittstelle in das System eingegeben werden. Beispielsweise erfolgt die Fertigmeldung manuell durch einen Werkstattmeister, der auch die Probefahrt durchführt. Es kann dann ein Statuswechsel von "in Arbeit" auf "Auftrag fertig" erfolgen, wobei der Statuswechsel auch auf der Darstellung angezeigt werden kann. Auch die weiteren Angaben, wie beispielsweise, wo das Fahrzeug steht und wer der Ansprechpartner ist, können über die Benutzerstelle manuell in das System eingegeben werden, wobei diese Informationen dann dem Kunden beispielsweise auf seinem Mobiltelefon angezeigt werden können. Die Informationen können zum Teil auch schon bei der Auftragsanlage über die Benutzerschnittstelle in das System eingeben werden. Insbesondere kann beispielsweise der Ansprechpartner bereits mit der Auftragsanlage in das System eingeben werden und während des Reparaturprozesses dem Kunden in der Darstellung beispielsweise auf seinem Mobiltelefon angezeigt werden. Auch können beispielsweise Rechnungsbeträge manuell in das System eingegeben und dem Kunden in der Darstellung auf beispielsweise seinem Mobiltelefon angezeigt werden.

Preisinformationen und/oder Angebote können flexibel wie auf einer Homepage hinterlegt werden, wobei der Kunde dann die zu den Preisinformationen gehörenden Angebote bzw. die Angebote selbst mittels einer Benutzerschnittstelle, insbesondere mittels eines Mausklicks, bestätigen oder auch ablehnen kann.

Das Informationssystem 1 weist des Weiteren eine Anzeigeeinheiterkennungseinheit 32 zum Erkennen des Typs der Anzeigeeinheit 22, insbesondere einer Displaygröße, auf, wobei die Darstellungseinheit 17 angepasst ist, die Darstellung 18 in Abhängigkeit von dem erkannten Typ zu erzeugen. Dies ermöglicht es, die Darstellung auf der Anzeigeeinheit 22 an beispielsweise die jeweilige Displaygröße anzupassen.

Im Folgenden wird beispielhaft ein Informationsverfahren zum Informieren über ein Fahrzeug zwischen dem Beginn eines Prozesses, das sich auf das Fahrzeug bezieht, und dem Ende des Prozesses unter Bezugnahme auf ein Flussdiagramm beschrieben, das in Figur 7 gezeigt ist.

In Schritt 101 werden elektrische Signale erzeugt, die indikativ sind für das in einem Bereich 10 eines Werkstattgeländes befindliche Fahrzeug 4, mittels mindestens einem von in den unterschiedlichen Bereichen 5...10 befindlichen Ortsbestimmungssensoren 11...16. In Schritt 102 wird das Fahrzeug 4 identifiziert und der Bereich wird bestimmt, in dem sich das Fahrzeug 4 befindet, basierend auf den erzeugten elektrischen Signalen. Zudem wird in Schritt 102 bevorzugt der Prozessstatus in Abhängigkeit von den erzeugten elektrischen Signalen bestimmt, d.h. erfasst. In Schritt 103 wird eine Darstellung 18 erzeugt, die einen Werkstattplan 19 und eine Kennzeichnung 20 des bestimmten Bereichs auf dem Werkstattplan 19 aufweist, und in Schritt 104 wird die Darstellung 18 an die Anzeigeeinheit 22 gesendet.

Die oben genannten Kundenzugangsdaten können einen persönlichen Link umfassen, der dem Kunden nach Abgabe des Fahrzeugs mitgeteilt wird. Der persönliche Link kann beispielsweise von der Darstellungseinheit automatisch auf Basis des erkannten Nummernschildes erzeugt werden. Wenn beispielsweise das Nummernschild HB-MT 123 lautet, könnte der persönliche Link die Bestandteile HB.MT.123 aufweisen und beispielsweise https://Infosystem.de/HB-MT-123.de lauten.

Die Möglichkeit der persönlichen Information über sein Fahrzeug mittels des oben beschriebenen Informationssystems kann dem Kunden bei der Auftragsbearbeitung angeboten werden, wobei der persönliche Link dem Kunden per E-Mail zugesendet werden kann.

Die Darstellungssendeeinheit kann auch so angepasst sein, dass sie es nicht nur dem Kunden ermöglicht, beispielsweise über seinen Computer oder sein Mobiltelefon die erzeugte Darstellung als Internetseite anzusehen, sondern auch beispielsweise der Betriebs- oder Werkstattleitung. Die Betriebs- oder Werkstattleitung kann daher mittels der Darstellung schnell Informationen über die Standorte der Fahrzeuge erlangen. Zudem können über die eingesetzten Kameras Bereiche eingesehen werden, die in der erzeugten Darstellung angezeigt werden können.

Das Informationssystem ermöglicht mittels der oben genannten Produktinformationen Standardwerbemaßnahmen und/oder individuelle Werbemaßnahmen.

Die Darstellungseinheit kann so angepasst sein, dass der Kunde ausschließlich sein Fahrzeug auf der Darstellung sieht. Das heißt, die Darstellungseinheit kann so angepasst sein, dass der Kunde nicht die anderen Fahrzeuge auf der Darstellung sieht, die sich auf dem Werkstattgelände befinden können. Die Ansicht aller oder mehrerer Fahrzeuge ist beispielsweise nur der Werkstattleitung vorbehalten. Das heißt, auch die Werkstattleitung kann über eine Anzeigeeinheit wie ein Mobiltelefon, ein Notebook oder ein PC über die jeweiligen Fahrzeuge informiert werden. Ob beispielsweise ein bestimmter Kunde auf die Darstellung zugreift oder beispielsweise die Werkstattleitung kann mittels der Zugangsdaten, das heißt beispielsweise über einen Link und ein dazugehöriges Passwort, bestimmt werden, wobei, wenn ein Kunde identifiziert worden ist, die Darstellung nur sein Fahrzeug und nicht die weiteren Fahrzeuge zeigt und, wenn die Werkstattleitung identifiziert worden ist, sämtliche Fahrzeuge in der Darstellung angezeigt werden.

Die Darstellungseinheit kann daher zudem angepasst sein, übergeordneten Personen wie beispielsweise Betriebsleitern oder Werkstattleitern übergreifende Zugriffe und/oder Ansichten zu geben.

Das Informationssystem kann zudem angepasst sein, einen Kunden mittels der eingebunden Kamera aufgefallene Probleme zu zeigen, die über das Informationssystem mit dem Kunden besprochen und über das Informationssystem von dem Kunden auch online beauftragt werden können. Beispielsweise können einem Monteur Kratzer und eine defekte Bremsscheibe auffallen, wobei der Kunde dann über das Informationssystem mit dem Monteur den Schaden besprechen und die Behebung des Schadens gegebenenfalls beauftragen kann.

Beispielsweise kann das System angepasst sein, dem Kunden eine zeitlich begrenzte Berechtigung zur Ansicht auf ein Kamerabild zur Verfügung zu stellen, das gerade sein Fahrzeug zeigt. Hierzu kann dem Kunden ein weiterer spezieller Link zusammen mit einem Passwort zur Verfügung gestellt werden, wobei nach dem Aufruf das aktuelle Bild der jeweiligen Kamera, die gerade das Fahrzeug zeigt, auf der Anzeigeeinheit, beispielsweise auf einem Mobiltelefon, einem Notebook oder einem PC, angezeigt wird. Auch Kameras, die nicht zur Kennzeichenerkennung, das heißt zur Identifizierung des Fahrzeugs, benutzt werden, können für die Übermittlung von aktuellen Kamerabildern verwendet werden. Beispielsweise kann eine separate Netzwerkkamera, insbesondere eine mobile, nicht standortgebundene Netzwerkkamera, verwendet werden, um ein aktuelles Bild des Fahrzeugs an die Anzeigeeinheit zu übermitteln.

Die von den Kameras aufgenommenen Bilder des Fahrzeugs können in der Fahrzeugdatenbank abgelegt werden. In der Fahrzeugdatenbank können die Daten eines Fahrzeugs in einer Fahrzeugakte abgespeichert werden, wobei die von dem jeweiligen Fahrzeug gemachten Bilder in der Fahrzeugakte gespeichert werden können.

Obwohl in den oben beschriebenen Ausführungsformen die Ortsbestimmungssensoren Nummernschilder des Fahrzeugs erfassen, können die Ortsbestimmungssensoren auch angepasst sein, andere Elemente des Fahrzeugs zu erfassen, die dann zur Identifizierung des Fahrzeugs verwendet werden können. Beispielsweise kann das Fahrzeug eine RFID-Identifizierung, einen Strichcode, et cetera aufweisen, wobei dann die Ortsbestimmungssensoren die jeweilige Kennung optisch, magnetisch, elektrisch et cetera abtasten, um ein entsprechendes elektrisches Signal zu erzeugen, das indikativ ist für das in dem jeweiligen Bereich befindliche Fahrzeug und das von der Fahrzeugidentifizierungseinheit zum Identifizieren des jeweiligen Fahrzeugs verwendet werden kann.

In einer Datenbank können Entscheidungen mit Ortsbereichen verknüpft sein, in denen sich das jeweilige Fahrzeug befinden kann. Auf Basis des bestimmten Ortsbereiches des Fahrzeugs kann das Informationssystem daher Entscheidungen, die gerade anstehen, ermitteln. Das Informationssystem kann dann ausgestaltet sein, die entsprechenden Entscheidungen in der Darstellung auf der Anzeigeeinheit darzustellen und/oder dem Kunden automatisch eine entsprechende E-Mail zu schicken, um auf eine Entscheidung aufmerksam zu machen. Das heißt beispielsweise, sobald ein Fahrzeug einen bestimmten Bereich betritt oder verlässt, kann das Informationssystem den Kunden beispielsweise über eine E-Mail oder über die Darstellung auf der Anzeigeeinheit entsprechend informieren. Beispielsweise können offene Punkte/Entscheidungen mit Auswahlfeldern dargestellt werden, die der Benutzer zur Auswahl bestimmter Elemente verwenden kann. Beispielsweise können bestimmte Farben oder Materialien in Auswahlfeldern angeboten werden, die dann der Benutzer mittels beispielsweise eines Mausklicks auswählen kann. Ist mit der Auswahl eine zeitliche Auftragserweiterung verbunden, kann die Anzeige entsprechend angepasst sein.

In den Ansprüchen schließen die Wörter "aufweisen" und "umfassen" nicht andere Elemente oder Schritte aus und der unbestimmte Artikel "ein" schließt eine Mehrzahl nicht aus.

Eine einzelne Einheit oder Vorrichtung kann die Funktionen mehrerer Elemente erfüllen, die in den Ansprüchen aufgeführt sind. Die Tatsache, dass einzelne Funktionen und Elemente in unterschiedlichen abhängigen Ansprüchen aufgeführt sind, bedeutet nicht, dass nicht auch eine Kombination dieser Funktionen oder Elemente vorteilhaft verwendet werden könnte. Entsprechendes gilt für Einheiten oder Vorrichtungen mit entsprechenden Funktionen, die in der Beschreibung erwähnt sind. Beispielsweise können auf mehrere Datenbanken verteilte Daten auch in einer Datenbank gespeichert werden oder auf mehr Datenbanken verteilt werden, als die in der obigen Beschreibung genannten Datenbanken.

Die Steuerung des Informationssystems gemäß des erfindungsgemäßen Informationsverfahrens kann als Programmcode eines Computerprogramms und/oder als entsprechende Hardware implementiert sein.

Ein Computerprogramm kann auf einem geeigneten Medium gespeichert und/oder verteilt werden, wie beispielsweise einem optischen Speichermedium oder einem Festkörperspeichermedium, das zusammen mit oder als Teil anderer Hardware vertrieben wird. Das Computerprogramm kann aber auch in anderen Formen vertrieben werden, beispielsweise über das Internet oder andere Telekommunikationssysteme.

Die Bezugszeichen in den Ansprüchen sind nicht derart zu verstehen, dass der Gegenstand und der Schutzbereich der Ansprüche durch diese Bezugszeichen eingeschränkt ist.

## Patentansprüche

1. Informationssystem zum Informieren über ein Fahrzeug (4) zwischen dem Beginn eines auf einem Werkstattgelände durchzuführenden Prozesses, das sich auf das Fahrzeug (4) bezieht, und dem Ende des Prozesses, wobei das Informationssystem (1) aufweist:
- in unterschiedlichen Bereichen (5...10) des Werkstattgeländes (3), in dem sich das Fahrzeug (4) befindet, angeordnete Ortsbestimmungssensoren (11...16), die angepasst sind, elektrische Signale zu erzeugen, die indikativ sind für das in dem jeweiligen Bereich befindliche Fahrzeug (4),
- eine Fahrzeugidentifizierungseinheit (2) zum Identifizieren des Fahrzeugs (4) und zum Bestimmen des Bereichs (10), in dem sich das Fahrzeug (4) befindet, basierend auf den erzeugten elektrischen Signalen,
- eine Darstellungseinheit (17) zum Erzeugen einer Darstellung (18), die einen Werkstattplan (19) und eine Kennzeichnung (20) des bestimmten Bereichs auf dem Werkstattplan (19) aufweist,
- eine Darstellungssendeeinheit (21) zum Senden der Darstellung an eine Anzeigeeinheit (22),
wobei die Darstellungseinheit (17) angepasst ist, als Darstellung (18) eine Internetseite zu erzeugen, auf der der bestimmte Bereich (10) dargestellt ist, wobei die Darstellungssendeeinheit (21) so angepasst ist, dass die Internetseite auf der Anzeigeeinheit (22) anzeigbar ist.

2. Informationssystem nach Anspruch 1, **dadurch gekennzeichnet, dass** das Informationssystem (1) eine Prozessstatuserfassungseinheit (25) zum Erfassen des Prozessstatus des Fahrzeugs (4) aufweist.

3. Informationssystem nach Anspruch 2, **dadurch gekennzeichnet, dass** die Prozessstatuserfassungseinheit (25) angepasst ist, den Prozessstatus des Fahrzeugs in Abhängigkeit von den von den Ortsbestimmungssensoren erzeugten elektrischen Signalen zu erfassen.

4. Informationssystem nach Anspruch 2, **dadurch gekennzeichnet, dass** die Prozessstatuserfassungseinheit (25) angepasst ist, den Prozessstatus in Abhängigkeit von dem Bereich (10), in dem sich das Fahrzeug (4) befindet, zu erfassen.

5. Informationssystem nach Anspruch 2, **dadurch gekennzeichnet, dass** die Darstellungseinheit (17) angepasst ist, den erfassten Prozessstatus auf der Darstellung (18) anzuzeigen.

6. Informationssystem nach Anspruch 1, **dadurch gekennzeichnet, dass** die Darstellungseinheit (17) angepasst ist, den erfassten Prozessstatus als Prozent- oder Zeitbalken anzuzeigen, der repräsentativ ist für den bereits durchgeführten Prozess und den noch durchzuführenden Prozess.

7. Informationssystem nach Anspruch 1, **dadurch gekennzeichnet, dass** die Ortsbestimmungssensoren (11...16) Kameras sind, die ein Bild des Fahrzeugs (4) aufnehmen, wobei die Darstellungseinheit (17) angepasst ist, das aufgenommene Bild des Fahrzeugs (4) anzuzeigen.

8. Informationssystem nach Anspruch 7, **dadurch gekennzeichnet, dass** die Darstellung ein eine Kamera repräsentierendes Symbol (23) an einer Stelle aufweist, an der eine Kamera eine Bild aufgenommen hat, wobei die Darstellungseinheit (17) angepasst ist, eine Benutzerschnittstelle in der Darstellung bereitzustellen, die es einem Benutzer ermöglicht, das Symbol (23) zu selektieren, und das mit der Kamera aufgenommene Bild darzustellen, wenn das Symbol (23) selektiert worden ist.

9. Informationssystem nach Anspruch 1, **dadurch gekennzeichnet, dass** das Informationssystem (1) eine Zeiterfassungseinheit (24) aufweist, wobei die Zeiterfassungseinheit (24) angepasst ist, die Zeit zu erfassen, während der sich das Fahrzeug (4) in dem bestimmten Bereich (10) befindet.

10. Informationssystem nach Anspruch 1, **dadurch gekennzeichnet, dass** die Darstellungseinheit (17) angepasst ist, Produktinformationen (28, 29) in der Darstellung (18) anzuzeigen.

11. Informationssystem nach Anspruch 10, **dadurch gekennzeichnet, dass** das Informationssystem (1) eine Produktinformationsdatenbank (26), in der Produktinformationen abgespeichert sind, die Fahrzeugdaten und/oder Jahreszeitdaten zugeordnet sind, und eine Fahrzeugdatenbank (27), in der die Fahrzeugdaten abgespeichert sind, aufweist, wobei die Darstellungseinheit (17) angepasst ist, Produktinformation in Abhängigkeit von den Fahrzeugdaten des identifizierten Fahrzeugs und/oder der Jahreszeit der Produktinformationsdatenbank (26) zu entnehmen und in der Darstellung anzuzeigen.

12. Informationssystem nach den Ansprüchen 2 und 10, **dadurch gekennzeichnet, dass** die Darstellungseinheit so angepasst ist, dass die Produktinformation in Abhängigkeit von dem Prozessstatus in der Darstellung angezeigt wird.

13. Informationssystem nach Anspruch 1, **dadurch gekennzeichnet, dass** das Informationssystem (1) eine Anzeigeeinheiterkennungseinheit (32) zum Erkennen des Typs der Anzeigeeinheit (22), insbesondere einer Displaygröße, aufweist, wobei die Darstellungseinheit (17) angepasst ist, die Darstellung (18) in Abhängigkeit von dem erkannten Typ zu erzeugen.

14. Informationsverfahren zum Informieren über ein Fahrzeug (4) zwischen dem Beginn eines auf einem Werkstattgelände durchzuführenden Prozesses, das sich auf das Fahrzeug (4) bezieht, und dem Ende des Prozesses, wobei das Informationsverfahren aufweist:
- Erzeugen elektrischer Signale, die indikativ sind für das in einem Bereich (10) des Werkstattgeländes (3) befindliche Fahrzeug (4), mittels mindestens einen von in unterschiedlichen Bereichen (5...10) des Werkstattgeländes befindlichen Ortsbestimmungssensoren (11...16),
- Identifizieren des Fahrzeugs und Bestimmen des Bereichs, in dem sich das Fahrzeug befindet, basierend auf den erzeugten elektrischen Signalen,
- Erzeugen einer Internetseite, die einen Werkstattplan des Werkstattgeländes und eine Kennzeichnung des bestimmten Bereichs auf dem Werkstattplan aufweist,
- Senden der Internetseite an eine Anzeigeeinheit, so dass die Internetseite auf der Anzeigeeinheit (22) anzeigbar ist.

15. Computerprogramm zum Informieren über ein Fahrzeug (4) zwischen dem Beginn eines auf einem Werkstattgelände durchzuführenden Prozesses, das sich auf das Fahrzeug (4) bezieht, und dem Ende des Prozesses, mit Computerprogrammcodemitteln zum Veranlassen, dass ein Informationssystem nach Anspruch 1 nachfolgende Schritte durchführt, wenn das Computerprogramm auf einem Computer ausgeführt wird, der das Informationssystem steuert:
- Erzeugen elektrischer Signale, die indikativ sind für das in einem Bereich (10) des Werkstattgeländes (3) befindliche Fahrzeug (4), mittels mindestens einen von in unterschiedlichen Bereichen (5...10) des Werkstattgeländes befindlichen Ortsbestimmungssensoren (11...16),
- Identifizieren des Fahrzeugs und Bestimmen des Bereichs, in dem sich das Fahrzeug befindet, basierend auf den erzeugten elektrischen Signalen,
- Erzeugen einer Internetseite, die einen Werkstattplan des Werkstattgeländes und eine Kennzeichnung des bestimmten Bereichs auf dem Werkstattplan aufweist,
- Senden der Internetseite an eine Anzeigeeinheit, so dass die Internetseite auf der Anzeigeeinheit (22) anzeigbar ist.
